# EUROPEAN PATENT SPECIFICATION

(11) **EP 3 384 706 B1**
(45) Date of publication and mention of the grant of the patent: **03.02.2021**
(21) Application number: 16871076.2
(22) Date of filing: 02.12.2016
(51) Int. Cl.: H04W 36/34, H04W 36/08, H04W 36/00, H04W 88/04

(54) **METHOD AND APPARATUS FOR SUPPORTING MOBILITY OF MASTER USER EQUIPMENT AND ITS COMPANION DEVICE IN WIRELESS COMMUNICATION SYSTEM**
VERFAHREN UND VORRICHTUNG ZUR UNTERSTÜTZUNG DER MOBILITÄT EINES MASTER-BENUTZERGERÄTS UND DESSEN BEGLEITVORRICHTUNG IN EINEM DRAHTLOSKOMMUNIKATIONSSYSTEM
PROCÉDÉ ET APPAREIL DE PRISE EN CHARGE DE MOBILITÉ D'ÉQUIPEMENT D'UTILISATEUR MAÎTRE ET SON DISPOSITIF AUXILIAIRE DANS UN SYSTÈME DE COMMUNICATION SANS FIL

(30) Priority: 02.12.2015 US 201562261860 P
(43) Date of publication of application: 10.10.2018
(73) Proprietor: LG Electronics Inc., Seoul 07336 (KR)
(72) Inventor: XU, Jian, Seoul 06772 (KR); LEE, Youngdae, Seoul 06772 (KR); BYUN, Daewook, Seoul 06772 (KR)
(74) Representative: Katérle, Axel
(86) International application number: PCT/KR2016/014096
(87) International publication number: WO 2017/095180

(56) References cited:
- WO-A1-2013/023171
- WO-A1-2015/030557
- WO-A1-2015/082154
- US-A1- 2011 170 427
- US-A1- 2014 135 008
- US-A1- 2015 017 944
- US-A1- 2015 181 481
- US-A1- 2015 245 255
- US-A1- 2015 358 860
- LG ELECTRONICS INC: "New SI Proposal: Enhanced Connectivity for Companion Device", 3GPP DRAFT; RP-151949 SID ENHANCED CONNECTIVITY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. TSG RAN, no. Sitges, Spain; 20151207 - 20151210 8 December 2015 (2015-12-08), XP051053072, Retrieved from the Internet: URL:http://www.3gpp.org/ftp/Meetings_3GPP_ SYNC/RAN/Docs/ [retrieved on 2015-12-08]
- ITRI: 'Discussion on D2D communications handover for service continuity' R2-151068, 3GPP TSG-RAN2 #89BIS 10 April 2015, BRATISLAVA, SLOVAKIA, XP050952886

## Description

### Technical Field

The present invention relates to wireless communications, and more particularly, to a method and apparatus for supporting mobility of a master user equipment (UE) and its companion device in a wireless communication system.

### Background Art

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Wearable devices, such as smart watches, are now available as a new type of user equipment on the market. As the number of wearable devices is increasing, customers' needs for those devices are glowing. For instance, customers expect extremely long battery life from smart watches, like battery life of normal watches, while expecting support of various application/services including delay sensitive services, e.g. voice, streaming, eHealth, like normal smart phones.

To provide long battery life, 3GPP specified power saving mode in Rel-12 and extended discontinuous reception (DRX) in Rel-13. However, those features are not suited to delay sensitive services in wearable devices which support LTE access. In addition, user equipment (UE) category 0 in Rel-12 machine-type communication (MTC) and new UE category in Rel-13 MTC do not fully support various application/ services that are used by such wearable devices.

3GPP SA1 study item New Services and Markets Technology Enablers (SMARTER) has progressed. One of the aspects in SMATER is to provide enhanced connectivity to wearable device and internet-of-things (IoT) devices in the context of connectivity aspects. The enhanced connectivity allows a device to be connected to the network through another UE. The device can switch between a direct connection and a relayed connection to the network.

Wearable devices on the market support Bluetooth and wireless local area network (WLAN) for a short range communication radio access technology (RAT) between UEs. Considering the devices on the market, it is interesting to support the enhanced connectivity via Bluetooth or WLAN. In the meantime, Bluetooth and WLAN cannot fully support various services with different quality of service (QoS).

When wearable device is connected to the network through another UE by enhanced connectivity, mobility, i.e. handover procedure, for wearable device should be considered.

US 2015/181481 A1 discloses cooperating nodes, and methods therein, for mobility procedures in a wireless communication system supporting UE groups. One of the cooperating nodes is a base station being associated with a UE group comprising UEs having correlated mobility related parameters. The method in the base station comprises receiving, from a first UE in the UE group, a mobility related parameter associated with the first UE. The method further comprises determining whether to initiate a mobility related procedure for a second UE in the UE group based on the received mobility related parameter, and further comprises initiating the mobility related procedure for the second UE when it is determined that the mobility related procedure is to be performed.

US 2015/245255 A1 discloses that, as part of a handover process for a group of UEs, the target base station and the source base station perform the transfer of the UE contexts.

### Disclosure of Invention

### Technical Problem

The present invention provides a method and apparatus for supporting mobility of a master user equipment (UE) and its companion device in a wireless communication system. The present invention provides a method and apparatus for transmitting a handover request message including UE context of both a master UE and a companion UE.

### Solution to Problem

The above object is achieved by the claimed subject-matter according to the independent claims.

### Advantageous Effects of Invention

Wearable device can be handed over to a target eNodeB (eNB) efficiently.

### Brief Description of Drawings

FIG. 1 shows LTE system architecture.
FIG. 2 shows a block diagram of architecture of a typical E-UTRAN and a typical EPC.
FIG. 3 shows a block diagram of a user plane protocol stack of an LTE system.
FIG. 4 shows a block diagram of a control plane protocol stack of an LTE system.
FIG. 5 shows an example of a physical channel structure.
FIG. 6 shows an example of relay based connection to network for a companion UE.
FIG. 7 shows an example of mobility for both a master UE and companion UE.
FIG. 8 shows a method for performing a handover procedure according to an embodiment of the present invention.
FIG. 9 shows a communication system to implement an embodiment of the present invention.

### Mode for the Invention

The technology described below can be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), etc. The CDMA can be implemented with a radio technology such as universal terrestrial radio access (UTRA) or CDMA-2000. The TDMA can be implemented with a radio technology such as global system for mobile communications (GSM)/general packet ratio service (GPRS)/enhanced data rate for GSM evolution (EDGE). The OFDMA can be implemented with a radio technology such as institute of electrical and electronics engineers (IEEE) 802.11 (Wi-Fi), IEEE 802.16 (WiMAX), IEEE 802-20, evolved UTRA (E-UTRA), etc. IEEE 802.16m is an evolution of IEEE 802.16e, and provides backward compatibility with an IEEE 802.16-based system. The UTRA is a part of a universal mobile telecommunication system (UMTS). 3rd generation partnership project (3GPP) long term evolution (LTE) is a part of an evolved UMTS (E-UMTS) using the E-UTRA. The 3GPP LTE uses the OFDMA in downlink and uses the SC-FDMA in uplink. LTE-advance (LTE-A) is an evolution of the 3GPP LTE.

For clarity, the following description will focus on the LTE-A. However, technical features of the present invention are not limited thereto.

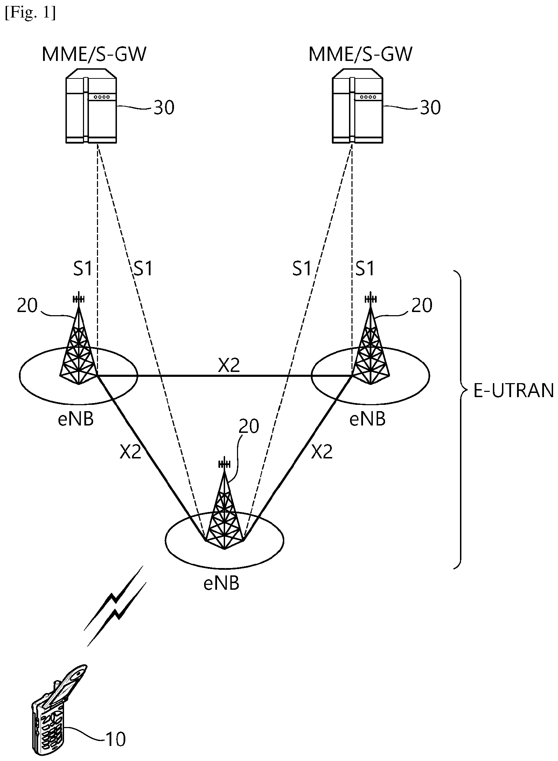

FIG. 1 shows LTE system architecture. The communication network is widely deployed to provide a variety of communication services such as voice over internet protocol (VoIP) through IMS and packet data.

Referring to FIG. 1, the LTE system architecture includes one or more user equipment (UE; 10), an evolved-UMTS terrestrial radio access network (E-UTRAN) and an evolved packet core (EPC). The UE 10 refers to a communication equipment carried by a user. The UE 10 may be fixed or mobile, and may be referred to as another terminology, such as a mobile station (MS), a user terminal (UT), a subscriber station (SS), a wireless device, etc.

The E-UTRAN includes one or more evolved node-B (eNB) 20, and a plurality of UEs may be located in one cell. The eNB 20 provides an end point of a control plane and a user plane to the UE 10. The eNB 20 is generally a fixed station that communicates with the UE 10 and may be referred to as another terminology, such as a base station (BS), an access point, etc. One eNB 20 may be deployed per cell.

Hereinafter, a downlink (DL) denotes communication from the eNB 20 to the UE 10, and an uplink (UL) denotes communication from the UE 10 to the eNB 20. In the DL, a transmitter may be a part of the eNB 20, and a receiver may be a part of the UE 10. In the UL, the transmitter may be a part of the UE 10, and the receiver may be a part of the eNB 20.

The EPC includes a mobility management entity (MME) and a serving gateway (S-GW). The MME/S-GW 30 may be positioned at the end of the network. For clarity, MME/S-GW 30 will be referred to herein simply as a "gateway," but it is understood that this entity includes both the MME and S-GW. A packet data network (PDN) gateway (P-GW) may be connected to an external network.

The MME provides various functions including non-access stratum (NAS) signaling to eNBs 20, NAS signaling security, access stratum (AS) security control, inter core network (CN) node signaling for mobility between 3GPP access networks, idle mode UE reachability (including control and execution of paging retransmission), tracking area list management (for UE in idle and active mode), packet data network (PDN) gateway (P-GW) and S-GW selection, MME selection for handovers with MME change, serving GPRS support node (SGSN) selection for handovers to 2G or 3G 3GPP access networks, roaming, authentication, bearer management functions including dedicated bearer establishment, support for public warning system (PWS) (which includes earthquake and tsunami warning system (ETWS) and commercial mobile alert system (CMAS)) message transmission. The S-GW host provides assorted functions including per-user based packet filtering (by e.g., deep packet inspection), lawful interception, UE Internet protocol (IP) address allocation, transport level packet marking in the DL, UL and DL service level charging, gating and rate enforcement, DL rate enforcement based on access point name aggregate maximum bit rate (APN-AMBR).

Interfaces for transmitting user traffic or control traffic may be used. The UE 10 is connected to the eNB 20 via a Uu interface. The eNBs 20 are connected to each other via an X2 interface. Neighboring eNBs may have a meshed network structure that has the X2 interface. A plurality of nodes may be connected between the eNB 20 and the gateway 30 via an S1 interface.

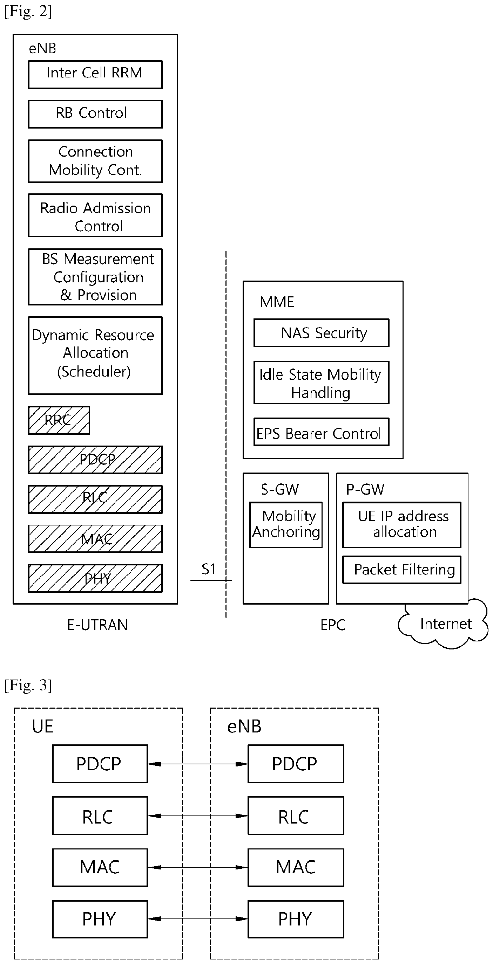

FIG. 2 shows a block diagram of architecture of a typical E-UTRAN and a typical EPC. Referring to FIG. 2, the eNB 20 may perform functions of selection for gateway 30, routing toward the gateway 30 during a radio resource control (RRC) activation, scheduling and transmitting of paging messages, scheduling and transmitting of broadcast channel (BCH) information, dynamic allocation of resources to the UEs 10 in both UL and DL, configuration and provisioning of eNB measurements, radio bearer control, radio admission control (RAC), and connection mobility control in LTE_ACTIVE state. In the EPC, and as noted above, gateway 30 may perform functions of paging origination, LTE_IDLE state management, ciphering of the user plane, SAE bearer control, and ciphering and integrity protection of NAS signaling.

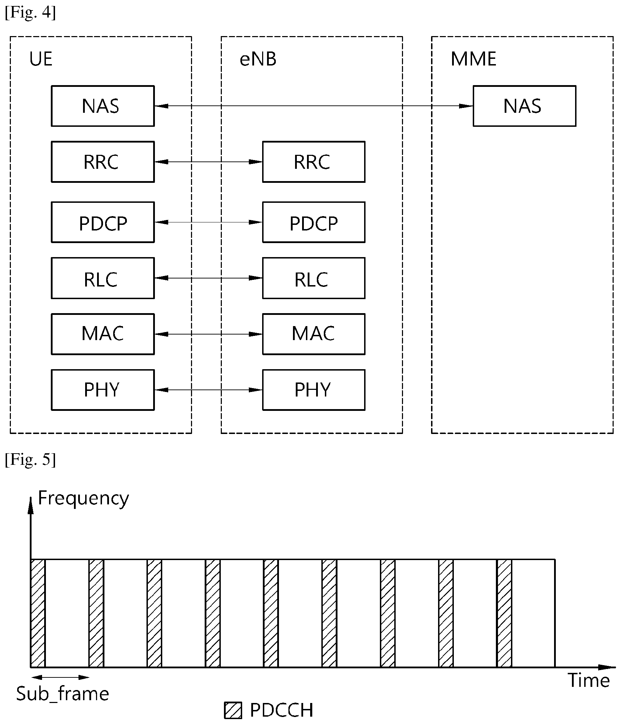

FIG. 3 shows a block diagram of a user plane protocol stack of an LTE system. FIG. 4 shows a block diagram of a control plane protocol stack of an LTE system. Layers of a radio interface protocol between the UE and the E-UTRAN may be classified into a first layer (L1), a second layer (L2), and a third layer (L3) based on the lower three layers of the open system interconnection (OSI) model that is well-known in the communication system.

A physical (PHY) layer belongs to the L1. The PHY layer provides a higher layer with an information transfer service through a physical channel. The PHY layer is connected to a medium access control (MAC) layer, which is a higher layer of the PHY layer, through a transport channel. A physical channel is mapped to the transport channel. Data between the MAC layer and the PHY layer is transferred through the transport channel. Between different PHY layers, i.e., between a PHY layer of a transmission side and a PHY layer of a reception side, data is transferred via the physical channel.

A MAC layer, a radio link control (RLC) layer, and a packet data convergence protocol (PDCP) layer belong to the L2. The MAC layer provides services to the RLC layer, which is a higher layer of the MAC layer, via a logical channel. The MAC layer provides data transfer services on logical channels. The RLC layer supports the transmission of data with reliability. Meanwhile, a function of the RLC layer may be implemented with a functional block inside the MAC layer. In this case, the RLC layer may not exist. The PDCP layer provides a function of header compression function that reduces unnecessary control information such that data being transmitted by employing IP packets, such as IPv4 or IPv6, can be efficiently transmitted over a radio interface that has a relatively small bandwidth.

A radio resource control (RRC) layer belongs to the L3. The RLC layer is located at the lowest portion of the L3, and is only defined in the control plane. The RRC layer controls logical channels, transport channels, and physical channels in relation to the configuration, reconfiguration, and release of radio bearers (RBs). The RB signifies a service provided the L2 for data transmission between the UE and E-UTRAN.

Referring to FIG. 3, the RLC and MAC layers (terminated in the eNB on the network side) may perform functions such as scheduling, automatic repeat request (ARQ), and hybrid ARQ (HARQ). The PDCP layer (terminated in the eNB on the network side) may perform the user plane functions such as header compression, integrity protection, and ciphering.

Referring to FIG. 4, the RLC and MAC layers (terminated in the eNB on the network side) may perform the same functions for the control plane. The RRC layer (terminated in the eNB on the network side) may perform functions such as broadcasting, paging, RRC connection management, RB control, mobility functions, and UE measurement reporting and controlling. The NAS control protocol (terminated in the MME of gateway on the network side) may perform functions such as a SAE bearer management, authentication, LTE_IDLE mobility handling, paging origination in LTE_IDLE, and security control for the signaling between the gateway and UE.

FIG. 5 shows an example of a physical channel structure. A physical channel transfers signaling and data between PHY layer of the UE and eNB with a radio resource. A physical channel consists of a plurality of subframes in time domain and a plurality of subcarriers in frequency domain. One subframe, which is 1 ms, consists of a plurality of symbols in the time domain. Specific symbol(s) of the subframe, such as the first symbol of the subframe, may be used for a physical downlink control channel (PDCCH). The PDCCH carries dynamic allocated resources, such as a physical resource block (PRB) and modulation and coding scheme (MCS).

A DL transport channel includes a broadcast channel (BCH) used for transmitting system information, a paging channel (PCH) used for paging a UE, a downlink shared channel (DL-SCH) used for transmitting user traffic or control signals, a multicast channel (MCH) used for multicast or broadcast service transmission. The DL-SCH supports HARQ, dynamic link adaptation by varying the modulation, coding and transmit power, and both dynamic and semi-static resource allocation. The DL-SCH also may enable broadcast in the entire cell and the use of beamforming.

A UL transport channel includes a random access channel (RACH) normally used for initial access to a cell, an uplink shared channel (UL-SCH) for transmitting user traffic or control signals, etc. The UL-SCH supports HARQ and dynamic link adaptation by varying the transmit power and potentially modulation and coding. The UL-SCH also may enable the use of beamforming.

The logical channels are classified into control channels for transferring control plane information and traffic channels for transferring user plane information, according to a type of transmitted information. That is, a set of logical channel types is defined for different data transfer services offered by the MAC layer.

The control channels are used for transfer of control plane information only. The control channels provided by the MAC layer include a broadcast control channel (BCCH), a paging control channel (PCCH), a common control channel (CCCH), a multicast control channel (MCCH) and a dedicated control channel (DCCH). The BCCH is a downlink channel for broadcasting system control information. The PCCH is a downlink channel that transfers paging information and is used when the network does not know the location cell of a UE. The CCCH is used by UEs having no RRC connection with the network. The MCCH is a point-to-multipoint downlink channel used for transmitting multimedia broadcast multicast services (MBMS) control information from the network to a UE. The DCCH is a point-to-point bi-directional channel used by UEs having an RRC connection that transmits dedicated control information between a UE and the network.

Traffic channels are used for the transfer of user plane information only. The traffic channels provided by the MAC layer include a dedicated traffic channel (DTCH) and a multicast traffic channel (MTCH). The DTCH is a point-to-point channel, dedicated to one UE for the transfer of user information and can exist in both uplink and downlink. The MTCH is a point-to-multipoint downlink channel for transmitting traffic data from the network to the UE.

Uplink connections between logical channels and transport channels include the DCCH that can be mapped to the UL-SCH, the DTCH that can be mapped to the UL-SCH and the CCCH that can be mapped to the UL-SCH. Downlink connections between logical channels and transport channels include the BCCH that can be mapped to the BCH or DL-SCH, the PCCH that can be mapped to the PCH, the DCCH that can be mapped to the DL-SCH, and the DTCH that can be mapped to the DL-SCH, the MCCH that can be mapped to the MCH, and the MTCH that can be mapped to the MCH.

An RRC state indicates whether an RRC layer of the UE is logically connected to an RRC layer of the E-UTRAN. The RRC state may be divided into two different states such as an RRC idle state (RRC_IDLE) and an RRC connected state (RRC_CONNECTED). In RRC_IDLE, the UE may receive broadcasts of system information and paging information while the UE specifies a discontinuous reception (DRX) configured by NAS, and the UE has been allocated an identification (ID) which uniquely identifies the UE in a tracking area and may perform public land mobile network (PLMN) selection and cell re-selection. Also, in RRC_IDLE, no RRC context is stored in the eNB.

In RRC_CONNECTED, the UE has an E-UTRAN RRC connection and a context in the E-UTRAN, such that transmitting and/or receiving data to/from the eNB becomes possible. Also, the UE can report channel quality information and feedback information to the eNB. In RRC_CONNECTED, the E-UTRAN knows the cell to which the UE belongs. Therefore, the network can transmit and/or receive data to/from UE, the network can control mobility (handover and inter-radio access technologies (RAT) cell change order to GSM EDGE radio access network (GERAN) with network assisted cell change (NACC)) of the UE, and the network can perform cell measurements for a neighboring cell.

In RRC_IDLE, the UE specifies the paging DRX cycle. Specifically, the UE monitors a paging signal at a specific paging occasion of every UE specific paging DRX cycle. The paging occasion is a time interval during which a paging signal is transmitted. The UE has its own paging occasion. A paging message is transmitted over all cells belonging to the same tracking area. If the UE moves from one tracking area (TA) to another TA, the UE will send a tracking area update (TAU) message to the network to update its location.

There is a lot of interest to use LTE technology to connect and manage low cost machine type communication (MTC) devices. One important example of such low cost devices are wearables, which also have the benefit of almost always being in close proximity to a smartphone that can serve as a relay. For the low cost devices, the application of device-to-device (D2D), including non-3GPP short-range technologies, has been discussed. In particular, there are two main aspects to be further enhanced in LTE technology to enable D2D aided wearable and MTC applications:
1) Enhancement of UE-to-network relaying functionality: The UE-to-network relaying architecture in proximity-based services (ProSe) does not differentiate the traffic of the remote UE from that of the relay UE in the access stratum. This model limits the ability of the network and the operator to treat the remote UE as a separate device, e.g. for billing or security. In particular, the 3GPP security associations never reach end-to-end (E2E) between the network and the remote UE, meaning that the relay UE has clear text access to the remote UE's communications. UE-to-network relaying should be enhanced to support end-to-end security through the relay link, service continuity, E2E quality of service (QoS) where possible, efficient operation with multiple remote UEs, and efficient path switching between Uu and D2D air-interfaces.
   Relaying using D2D can also be based on non-3GPP technologies such as Bluetooth and Wi-Fi. Some enhancements such as service continuity can make relaying more attractive for such technologies in commercial use cases. This can be especially useful to wearables due to their usage patterns with proximity to the user's smartphone, as well as form-factor limitations (e.g. limits on battery size).
   Relaying can enable significant power savings for remote UEs (that are getting their traffic relayed). This is especially true for deep coverage scenarios. One cost effective way of introduce relaying is to use unidirectional D2D links between remote devices and relay devices. In this case, the relay UE is utilized to relay only UL data from the remote UE. The advantage of this approach is no additional radio frequency (RF) capability for D2D reception is added to the remote UE.
2) Enhancements to enable reliable unicast PC5 link to at least support low power, low rate and low complexity/cost devices: Low cost D2D devices can be enabled by reusing the ideas developed during narrowband internet-of-things (NB-IoT) and enhanced MTC (eMTC) studies, e.g. the NB-IoT/eMTC uplink waveform can be reused for D2D. Such devices will potentially use a single modem for communicating with the Internet/cloud and for communicating with proximal devices. The current PC5 link design inherited from the broadcast oriented design driven by public safety use cases, represents a bottleneck that prevents low power and reliable D2D communication, due to lack of any link adaptation and feedback mechanisms. These shortcomings do not allow achieving target performance metrics for wearable and MTC use cases in terms of power consumption, spectrum efficiency, and device complexity. Reduced power consumption and low complexity are the key attributes of wearable and MTC use cases that are typically characterized by small form factors and long battery lifetime.

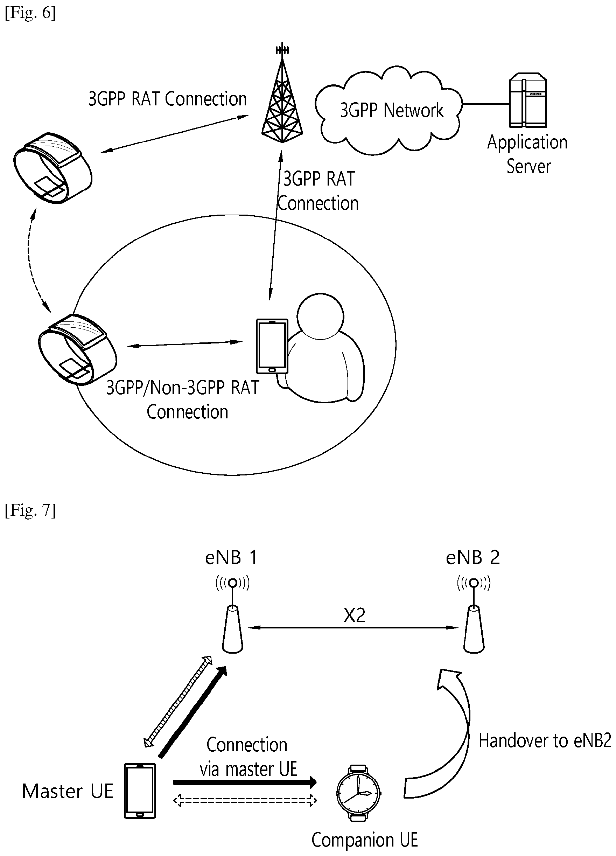

FIG. 6 shows an example of relay based connection to network for a companion UE. Referring to FIG. 6, the companion UE may be connected to the network via a master UE indirectly by relay based connection. The companion UE using the relay based connection may able to exchange control signaling such as RRC/ NAS messages via the relay based connection with the master UE, even while the companion UE is turning off Uu operation. It may be assumed that normal services as well as IoT services are used over the relay based connection. The companion UE may support normal UE capability for LTE, e.g. Cat 4 or higher.

The companion UE and the master UE may be connected via short range communication RAT, such as Bluetooth, WLAN or 3GPP access network. However, the prior art does not consider mobility of the master UE and companion UE together. That is, in perspective of the target eNB of handover procedure, the target eNB cannot acknowledge whether the master UE and companion UE are handed over together or only one UE is handed over. Accordingly, a method for solving a potential problem due to handover to neighbor eNB should be addressed.

FIG. 7 shows an example of mobility for both a master UE and companion UE. Referring to FIG. 7, the master UE is connected to an eNB1 by 3GPP access network. Further, the companion UE is connected to the network via the master UE. The companion UE and the master UE may be connected to each other via 3GPP access network, Bluetooth or Wi-Fi.

The master UE and the companion UE may be intended to be handed over from eNB1 to eNB2. In this case, the eNB1, i.e. source eNB, transmits a handover request message to the eNB2, i.e. target eNB. The handover request message may include UE context of both the master UE and the companion UE. More specifically, the UE context of both the master UE and the companion UE may indicate that the master UE and the companion UE constitute a pair with each other. For example, by the presence of the UE context of both the master UE and the companion UE in the handover request message, the eNB2 may identify that the two UEs are a pair.

The UE context described above may correspond to E-UTRAN radio access bearer (E-RAB). The E-RABs of the master UE and the E-RABs of the companion UE should be differentiated. Differentiation of the E-RABs of the master UE and the E-RABs of the companion UE may be realized by one of E-RAB ID, E-RAB level QoS parameters, DL Forwarding, or UL GPRS tunneling protocol (GTP) tunnel endpoint.

Further, RRC context of the master UE and RRC context of the companion UE may also be differentiated with an indicator. Or, RRC context of the master UE and RRC context of the companion UE may be merged into one RRC context. The measurement report of the master UE and the measurement report of the companion UE may also be differentiated.

With the UE context of both the master UE and the companion UE included in the handover request message, the target eNB can identify relationship between the master UE and the companion UE. Accordingly, the eNB can take the corresponding action when deciding how to accept the E-RABs or how to use the control plane RRC parameters. Therefore, the service continuity can be guaranteed.

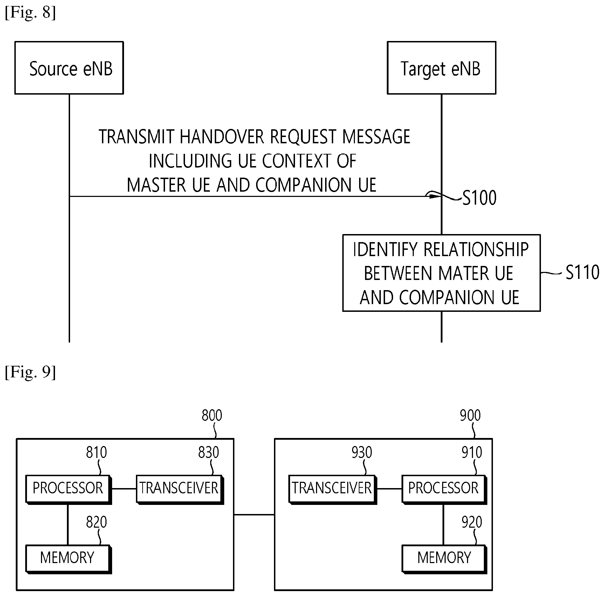

FIG. 8 shows a method for performing a handover procedure according to an embodiment of the present invention. In this embodiment, a companion UE is connected to a source eNB via the master UE. The companion UE is connected to the master UE via one of 3GPP access network, Bluetooth or a Wi-Fi.

In step S100, the source eNB transmits a handover request message including a UE context of a master UE and a UE context of a companion UE to a target eNB. The UE context of the master UE and the UE context UE of the companion UE may indicate that the master UE and the companion UE are pair. The UE context of the master UE and the UE context UE of the companion UE may correspond to an E-RAB of the master UE and an E-RAB of the companion UE, respectively. In this case, the E-RAB of the master UE and the E-RAB of the companion UE are differentiated from each other by one of an E-RAB ID, an E-RAB level QoS parameter, a DL forwarding or a UL GTP tunnel endpoint. Or, the UE context of the master UE and the UE context UE of the companion UE correspond to a RRC context of the master UE and an RRC context of the companion UE, respectively. In this case, the RRC context of the master UE and the RRC context of the companion UE may be differentiated from each other or merged into one RRC context. Or, the UE context of the master UE and the UE context UE of the companion UE may correspond to a measurement report of the master UE and a measurement report of the companion UE, respectively. In this case, the measurement report of the master UE and the measurement report of the companion UE may be differentiated from each other.

In step S 110, the target eNB identifies relationship between the master UE and the companion UE. Accordingly, the eNB can take the corresponding action when deciding how to accept the E-RABs or how to use the control plane RRC parameters. Therefore, the service continuity can be guaranteed.

FIG. 9 shows a communication system to implement an embodiment of the present invention.

A first eNB 800 may include a processor 810, a memory 820 and a transceiver 830. The processor 810 may be configured to implement proposed functions, procedures and/or methods described in this description. Layers of the radio interface protocol may be implemented in the processor 810. The memory 820 is operatively coupled with the processor 810 and stores a variety of information to operate the processor 810. The transceiver 830 is operatively coupled with the processor 810, and transmits and/ or receives a radio signal.

A second eNB 900 may include a processor 910, a memory 920 and a transceiver 930. The processor 910 may be configured to implement proposed functions, procedures and/or methods described in this description. Layers of the radio interface protocol may be implemented in the processor 910. The memory 920 is operatively coupled with the processor 910 and stores a variety of information to operate the processor 910. The transceiver 930 is operatively coupled with the processor 910, and transmits and/or receives a radio signal.

The processors 810, 910 may include application-specific integrated circuit (ASIC), other chipset, logic circuit and/or data processing device. The memories 820, 920 may include read-only memory (ROM), random access memory (RAM), flash memory, memory card, storage medium and/or other storage device. The transceivers 830, 930 may include baseband circuitry to process radio frequency signals. When the embodiments are implemented in software, the techniques described herein can be implemented with modules (e.g., procedures, functions, and so on) that perform the functions described herein. The modules can be stored in memories 820, 920 and executed by processors 810, 910. The memories 820, 920 can be implemented within the processors 810, 910 or external to the processors 810, 910 in which case those can be communicatively coupled to the processors 810, 910 via various means as is known in the art.

In view of the exemplary systems described herein, methodologies that may be implemented in accordance with the disclosed subject matter have been described with reference to several flow diagrams. While for purposed of simplicity, the methodologies are shown and described as a series of steps or blocks, it is to be understood and appreciated that the claimed subject matter is not limited by the order of the steps or blocks, as some steps may occur in different orders or concurrently with other steps from what is depicted and described herein. Moreover, one skilled in the art would understand that the steps illustrated in the flow diagram are not exclusive and other steps may be included or one or more of the steps in the example flow diagram may be deleted without affecting the scope of the present disclosure.

## Claims

1. A method for performing a handover procedure in a wireless communication system, the method performed by a target eNodeB, eNB, and comprising:
receiving, by the target eNB, a handover request message including a device context of a master User Equipment, UE, and a device context of a companion UE from a source eNB,
wherein the device context of the master UE is related to a measurement report of the master UE and the device context of the companion UE is related to a measurement report of the companion UE,
wherein the master UE is directly connected with the source eNB,
wherein the companion UE, which is a wearable device, is indirectly connected with the source eNB via the master UE,
wherein the master UE is not the wearable device, and
wherein the companion UE is connected to any eNBs via the master UE by relay based connection; and
determining, by the target eNB, a relationship between the master UE and the companion UE based on both the device context of the master UE and the device context of the companion UE,
wherein the relationship between the master UE and the companion UE is determined to be a pair, and
wherein based on that the relationship between the master UE and the companion UE is determined to be the pair, the master UE and the companion UE are handed over together to the target eNB.

2. The method of claim 1, wherein the companion UE is connected to the master UE via one of 3rd generation partnership project, 3GPP, access network, Bluetooth or a Wi-Fi.

3. The method of claim 1, wherein the device context of the master UE and the device context of the companion UE are related to an E-UTRAN radio access bearer, E-RAB, of the master UE and an E-RAB of the companion UE, respectively.

4. The method of claim 3, wherein the E-RAB of the master UE and the E-RAB of the companion UE are differentiated from each other based on one of an E-RAB ID, an E-RAB level quality of service, QoS, parameter, a downlink, DL, forwarding or an uplink, UL, GPRS tunneling protocol, GTP, tunnel endpoint.

5. The method of claim 1, wherein the device context of the master UE and the device context of the companion UE are related to a radio resource control, RRC, context of the master UE and an RRC context of the companion UE, respectively.

6. The method of claim 5, wherein the RRC context of the master UE and the RRC context of the companion UE are differentiated from each other or merged into one RRC context.

7. The method of claim 1, wherein the measurement report of the master UE and the measurement report of the companion UE are differentiated from each other.

8. A target eNodeB, eNB, performing a handover procedure in a wireless communication system, the target eNB comprising:
a memory;
a transceiver; and
a processor, operatively coupled to the memory and the transceiver, the processor is configured to:
control the transceiver to receive a handover request message including a device context of a master User Equipment, UE, and a device context of a companion UE from a source eNB,
wherein the device context of the master UE is related to a measurement report of the master UE and the device context of the companion UE is related to a measurement report of the companion UE,
wherein the master UE is directly connected with the source eNB,
wherein the companion UE, which is a wearable device, is indirectly connected with the source eNB via the master UE,
wherein the master UE is not the wearable device, and
wherein the companion UE is connected to any eNBs via the master UE by relay based connection; and
determine a relationship between the master UE and the companion UE based on both the device context of the master UE and the device context of the companion UE,
wherein the relationship between the master UE and the companion UE is determined to be a pair, and
wherein based on that the relationship between the master UE and the companion UE is determined to be the pair, the master UE and the companion UE are handed over together to the target eNB.

9. The target eNB of claim 8, wherein the device context of the master UE and the device context of the companion UE are related to a measurement report of the master UE and a measurement report of the companion UE, respectively.

10. The target eNB of claim 8, wherein the companion UE is connected to the master UE via one of 3rd generation partnership project, 3GPP, access network, Bluetooth or a Wi-Fi.

11. The target eNB of claim 9, wherein the measurement report of the master UE and the measurement report of the companion UE are differentiated from each other.

12. The target eNB of claim 8, wherein the device context of the master UE and the device context of the companion UE are related to an E-UTRAN radio access bearer, E-RAB, of the master UE and an E-RAB of the companion UE, respectively.

13. The target eNB of claim 12, wherein the E-RAB of the master UE and the E-RAB of the companion UE are differentiated from each other based on one of an E-RAB ID, an E-RAB level quality of service, QoS, parameter, a downlink, DL, forwarding or an uplink, UL, GPRS tunneling protocol, GTP, tunnel endpoint.

14. The target eNB of claim 8, wherein the device context of the master UE and the device context of the companion UE are related to a radio resource control, RRC, context of the master UE and an RRC context of the companion UE, respectively.

15. The target eNB of claim 14, wherein the RRC context of the master UE and the RRC context of the companion UE are differentiated from each other or merged into one RRC context.

## Patentansprüche

1. Verfahren zum Durchführen einer Übergabe-Prozedur in einem drahtlosen Kommunikationssystem, wobei das Verfahren durch eine Ziel-eNodeB, eNB, durchgeführt wird, und umfasst:
Empfangen, durch die Ziel-eNB, einer Übergabe-Anforderungsnachricht, die einen Gerätekontext eines Master-Benutzerendgeräts, -UEs, und einen Gerätekontext eines Begleiter-UEs umfasst, von einer Quellen-eNB,
wobei der Gerätekontext des Master-UEs mit einem Messbericht des Master-UEs in Beziehung steht und der Gerätekontext des Begleiter-UEs mit einem Messbericht des Begleiter-UEs in Beziehung steht,
wobei das Master-UE direkt mit der Quellen-eNB verbunden ist,
wobei das Begleiter-UE, das eine am Körper tragbare Vorrichtung ist, über das Master-UE indirekt mit der Quellen-eNB verbunden ist,
wobei das Master-UE nicht die am Körper tragbare Vorrichtung ist, und
wobei das Begleiter-UE über das Master-UE durch relaisbasierte Verbindung mit beliebigen eNBs verbunden ist; und
Bestimmen, durch die Ziel-eNB, eines Zusammenhangs zwischen dem Master-UE und dem Begleiter-UE basierend auf sowohl dem Gerätekontext des Master-UEs als auch dem Gerätekontext des Begleiter-UEs,
wobei die Beziehung zwischen dem Master-UE und dem Begleiter-UE als ein Paar bestimmt wird, und
wobei basierend darauf, dass die Beziehung zwischen dem Master-UE und dem Begleiter-UE als ein Paar bestimmt wird, das Master-UE und das Begleiter-UE zusammen an die Ziel-eNB übergeben werden.

2. Verfahren nach Anspruch 1, wobei das Begleiter-UE mit dem Master-UE über 3rd Generation Partnership Projekt, 3GPP, Zugangsnetzwerk, Bluetooth oder einem Wi-Fi verbunden ist.

3. Verfahren nach Anspruch 1, wobei der Gerätekontext des Master-UEs und der Gerätekontext des Begleiter-UEs mit einem E-UTRAN-Funkzugangsträger, E-RAB, des Master-UEs bzw. einem E-RAB des Begleiter-UEs in Beziehung stehen.

4. Verfahren nach Anspruch 3, wobei der E-RAB des Master-UEs und der E-RAB des Begleiter-UEs voneinander unterschieden werden, basierend auf einer E-RAB-ID, einem E-RAB-Level-Quality-of-Service-, QoS-, Parameter, einer Downlink-, DL-, Weiterleitung oder einem Uplink-, UL-, GPRS-Tunnelprotokoll-, GTP-, Tunnel-Endpunkt.

5. Verfahren nach Anspruch 1, wobei der Gerätekontext des Master-UEs und der Gerätekontext des Begleiter-UEs mit einem Funkressourcensteuerungs, RRC-, Kontext des Master-UEs bzw. einem RRC-Kontext des Begleiter-UEs in Beziehung stehen.

6. Verfahren nach Anspruch 5, wobei der RRC-Kontext des Master-UEs und der RRC-Kontext des Begleiter-UEs voneinander unterschieden oder in einen RRC-Kontext zusammengeführt sind.

7. Verfahren nach Anspruch 1, wobei der Messbericht des Master-UEs und der Messbericht des Begleiter-UEs voneinander unterschieden werden.

8. Ziel-eNodeB, -eNB, welche ein Übergabe-Verfahrens in einem drahtlosen Kommunikationssystem durchführt, wobei die Ziel-eNB umfasst:
einen Speicher;
einem Transceiver; und
einen Prozessor, der operativ mit dem Speicher und dem Transceiver gekoppelt ist, wobei der Prozessor konfiguriert ist zum:
Steuern des Transceivers zum Empfangen einer Übergabe-Anforderungsnachricht, die einen Gerätekontext eines Master-Benutzerendgeräts, - UEs, und einen Gerätekontext eines Begleiter-UEs umfasst, von einer Quellen-eNB,
wobei der Gerätekontext des Master-UEs mit einem Messbericht des Master-UEs in Beziehung steht und der Gerätekontext des Begleiter-UEs mit einem Messbericht des Begleiter-UEs in Beziehung steht,
wobei das Master-UE direkt mit der Quellen-eNB verbunden ist,
wobei das Begleiter-UE, das eine am Körper tragbare Vorrichtung ist, über das Master-UE indirekt mit der Quellen-eNB verbunden ist,
wobei das Master-UE nicht die am Körper tragbare Vorrichtung ist, und
wobei das Begleiter-UE über das Master-UE durch relaisbasierte Verbindung mit beliebigen eNBs verbunden ist; und
Bestimmen eines Zusammenhangs zwischen dem Master-UE und dem Begleiter-UE basierend auf sowohl dem Gerätekontext des Master-UEs als auch dem Gerätekontext des Begleiter-UEs,
wobei die Beziehung zwischen dem Master-UE und dem Begleiter-UE als ein Paar bestimmt wird, und
wobei basierend darauf, dass die Beziehung zwischen dem Master-UE und dem Begleiter-UE als ein Paar bestimmt wird, das Master-UE und das Begleiter-UE zusammen an die Ziel-eNB übergeben werden

9. Ziel-eNB nach Anspruch 8, wobei der Gerätekontext des Master-UEs und der Gerätekontext des Begleiter-UEs mit einem Messbericht des Master-UEs bzw. einem Messbericht des Begleiter-UEs in Beziehung stehen.

10. Ziel-eNB nach Anspruch 8, wobei das Begleiter-UE mit dem Master-UE über 3rd Generation Partnership Projekt, 3GPP, Zugangsnetzwerk, Bluetooth oder einem Wi-Fi verbunden ist.

11. Ziel-eNB nach Anspruch 9, wobei der Messbericht des Master-UEs und der Messbericht des Begleiter-UEs voneinander unterschieden werden.

12. Ziel-eNB nach Anspruch 8, wobei der Gerätekontext des Master-UEs und der Gerätekontext des Begleiter-UEs mit einem E-UTRAN-Funkzugangsträger, E-RAB, des Master-UEs bzw. einem E-RAB des Begleiter-UEs in Beziehung stehen.

13. Ziel-eNB nach Anspruch 12, wobei der E-RAB des Master-UEs und der E-RAB des Begleiter-UEs voneinander unterschieden werden, basierend auf einer E-RAB-ID, einem E-RAB-Level-Quality-of-Service-, QoS-, Parameter, einer Downlink-, DL-, Weiterleitung oder einem Uplink-, UL-, GPRS-Tunnelprotokoll-, GTP-, Tunnel-Endpunkt.

14. Ziel-eNB nach Anspruch 8, wobei der Gerätekontext des Master-UEs und der Gerätekontext des Begleiter-UEs mit eienm Funkressourcensteuerungs, RRC-, Kontext des Master-UEs bzw. einem RRC-Kontext des Begleiter-UEs in Beziehung stehen.

15. Ziel-eNB nach Anspruch 14, wobei der RRC-Kontext des Master-UEs und der RRC-Kontext des Begleiter-UEs voneinander unterschieden oder in einen RRC-Kontext zusammengeführt sind.

## Revendications

1. Procédé pour réaliser une procédure de transfert dans un système de communication sans fil, le procédé étant exécuté par un nœud évolué B cible, eNB, et consistant à :
recevoir, par le eNB cible, un message de demande de transfert comprenant un contexte de dispositif d'un équipement utilisateur maître, UE, et un contexte de dispositif d'un UE compagnon provenant d'un eNB source,
le contexte de dispositif de l'UE maître se rapportant à un rapport de mesure de l'UE maître et le contexte de dispositif de l'UE compagnon se rapportant à un rapport de mesure de l'UE compagnon,
l'UE maître étant directement connecté à l'eNB source,
l'UE compagnon, qui est un dispositif vestimentaire, étant indirectement connecté à la source eNB par l'intermédiaire de l'UE,
l'UE maître n'étant pas le dispositif vestimentaire, et
l'UE compagnon étant connecté à de quelconques eNB par l'intermédiaire de l'UE par une connexion par relais ;
déterminer, par l'eNB cible, une relation entre l'UE maître et l'UE compagnon en fonction du contexte de dispositif de l'UE maître et du contexte de dispositif de l'UE compagnon,
la relation entre l'UE maître et l'UE compagnon étant déterminée pour être une paire, et
étant donné que la relation entre l'UE maître et l'UE compagnon est déterminée pour être une paire, l'UE maître et l'UE compagnon sont transférés ensemble vers l'eNB cible.

2. Procédé selon la revendication 1, l'UE compagnon étant connecté à l'UE connecté par l'intermédiaire d'un réseau d'accès de projet de partenariat de troisième génération, 3GPP, par Bluetooth ou par Wi-Fi.

3. Procédé selon la revendication 1, le contexte de dispositif de l'UE maître et le contexte de dispositif de l'UE compagnon se rapportant à un support d'accès radio E-UTRAN, E-RAB, de l'UE maître et un E-RAB de l'UE compagnon, respectivement.

4. Procédé selon la revendication 3, l'E-RAB de l'UE maître et l'E-RAB de l'UE compagnon étant différents l'un de l'autre en fonction d'un ID d'E-RAB et/ou un paramètre niveau de qualité de service d'E-RAB, QoS, et/ou un acheminement en liaison descendante, DL, ou un point d'extrémité de tunnel de protocole de tunneling GPRS, en liaison montante.

5. Procédé selon la revendication 1, le contexte de dispositif de l'UE maître et le contexte de dispositif de l'UE compagnon se rapportant à un contexte de gestion des ressources radio, RRC, de l'UE maître et un contexte de RRC de l'UE compagnon, respectivement.

6. Procédé selon la revendication 5, le contexte de RRC de l'UE maître et le contexte de RRC de l'UE compagnon étant différents l'un de l'autre ou fusionnés dans un contexte de RRC.

7. Procédé selon la revendication 1, le rapport de mesure de l'UE maître et le rapport de mesure de l'UE compagnon étant différents l'un de l'autre.

8. eNB cible, eNB, effectuant une procédure de transfert dans un système de communication sans fil, l'eNB cible comprenant :
une mémoire ;
un émetteur-récepteur ; et
un processeur, couplé fonctionnellement à la mémoire et à l'émetteur-récepteur, le processeur étant conçu pour :
amener l'émetteur-récepteur à recevoir un message de demande de transfert comprenant le contexte de dispositif de l'équipement utilisateur maître, UE, et le contexte de dispositif de l'UE compagnon en provenance d'un eNB source,
le contexte de dispositif de l'UE maître se rapportant à un rapport de mesure de l'UE maître et le contexte de dispositif de l'UE compagnon se rapportant à un rapport de mesure de l'UE compagnon,
l'UE maître étant directement connecté au eNB source,
l'UE compagnon, qui est un dispositif vestimentaire, étant indirectement connecté au eNB source par l'intermédiaire de l'UE maître,
l'UE maître n'étant pas un dispositif vestimentaire, et
l'UE compagnon étant connecté à des quelconques eNB par l'intermédiaire de l'UE maître par une connexion par relais ;
déterminer une relation entre l'UE maître l'UE compagnon en fonction, à la fois, du contexte de dispositif de l'UE maître et le contexte de dispositif de l'UE compagnon,
la relation entre l'UE maître et l'UE compagnon étant déterminée pour être une paire, et
étant donné que la relation entre l'UE maître et l'UE compagnon est déterminée pour être une paire, l'UE maître et l'UE compagnon étant transférés ensemble vers l'eNB cible.

9. eNB cible selon la revendication 8, le contexte de dispositif de l'UE maître et le contexte de dispositif de l'UE compagnon se rapportant à un rapport de mesure de l'UE maître et un rapport de mesure de l'UE compagnon, respectivement.

10. eNB cible selon la revendication 8, l'UE compagnon étant connecté à l'UE maître par l'intermédiaire d'un réseau d'accès de projet de partenariat de troisième génération, 3GPP, par Bluetooth ou par Wi-Fi.

11. eNB cible selon la revendication 9, le rapport de mesure de l'UE maître et le rapport de mesure de l'UE compagnon étant différents l'un de l'autre.

12. eNB cible selon la revendication 8, le contexte de dispositif de l'UE maître et le contexte de dispositif de l'UE compagnon se rapportant à un support d'accès radio E-TRAN, E-RAB, de l'UE maître et un E-RAB de l'UE compagnon, respectivement.

13. eNB cible selon la revendication 12, l'E-RAB de l'UE maître et l'E-RAB de l'UE compagnon étant différents l'un de l'autre en fonction d'un ID d'E-RAB, d'un paramètre de niveau de qualité de service, E-RAB, QoS, un point d'extrémité de tunnel de protocole de tunnelisation GPRS, GTP, en liaison montante, UL ou un acheminement en liaison descendante, DL.

14. eNB cible selon la revendication 8, le contexte de dispositif de l'UE maître et le contexte de dispositif de l'UE compagnon se rapportant à un contexte de gestion de ressources radio, RRC, de l'UE maître et un contexte de RRC de l'UE compagnon, respectivement.

15. eNB cible selon la revendication 14, le contexte de RRC de l'UE maître et le contexte de RRC de l'UE compagnon étant différents l'un de l'autre ou fusionnés dans un contexte de RRC.
